# EUROPEAN PATENT SPECIFICATION

(11) **EP 0 536 318 B1**
(45) Date of publication and mention of the grant of the patent: **10.09.1997**
(21) Application number: 91913620.0
(22) Date of filing: 28.06.1991
(51) Int. Cl.: C08B 37/16, C08B 37/00

(54) **REGIOSELECTIVE SUBSTITUTIONS IN CYCLODEXTRINS**
REGIOSELEKTIVE SUBSTITUTIONEN VON CYCLODEXTRINEN
SUBSTITUTIONS REGIOSELECTIVES DANS DES CYCLODEXTRINES

(30) Priority: 28.06.1990 US 544546
(43) Date of publication of application: 14.04.1993
(73) Proprietor: THE UNITED STATES OF AMERICA as represented by the Secretary UNITED STATES DEPARTMENT OF COMMERCE, Washington, DC 20231 (US)
(72) Inventor: PITHA, Josef, Baltimore, MD 21224 (US); RAO, C., Trinadha, Baltimore, MD 21224 (US); LINDBERG, Bengt, S-116 32 Stockholm (SE)
(74) Representative: Hucker, Charlotte Jane
(86) International application number: PCT/US91/04651
(87) International publication number: WO 92/00331

(56) References cited:
- WO-A-89/06536
- WO-A-90/02141
- US-A- 3 459 731
- US-A- 3 654 370
- US-A- 4 020 160
- US-A- 4 124 758
- US-A- 4 247 535
- US-A- 4 582 900
- US-A- 4 638 058
- US-A- 4 727 064
- US-A- 4 840 941
- US-A- 4 877 778
- US-A- 4 912 093
- US-A- 5 019 562
- DATABASE WPI, Week 2675, Derwent Publications Ltd., London, GB; AN 75-43537W; & JP-A-50 036 422 (AJINOMOTO KK) 5 April 1975

## Description

### BACKGROUND OF THE INVENTION

This invention relates to a process for increasing the solubility of cyclodextrins.

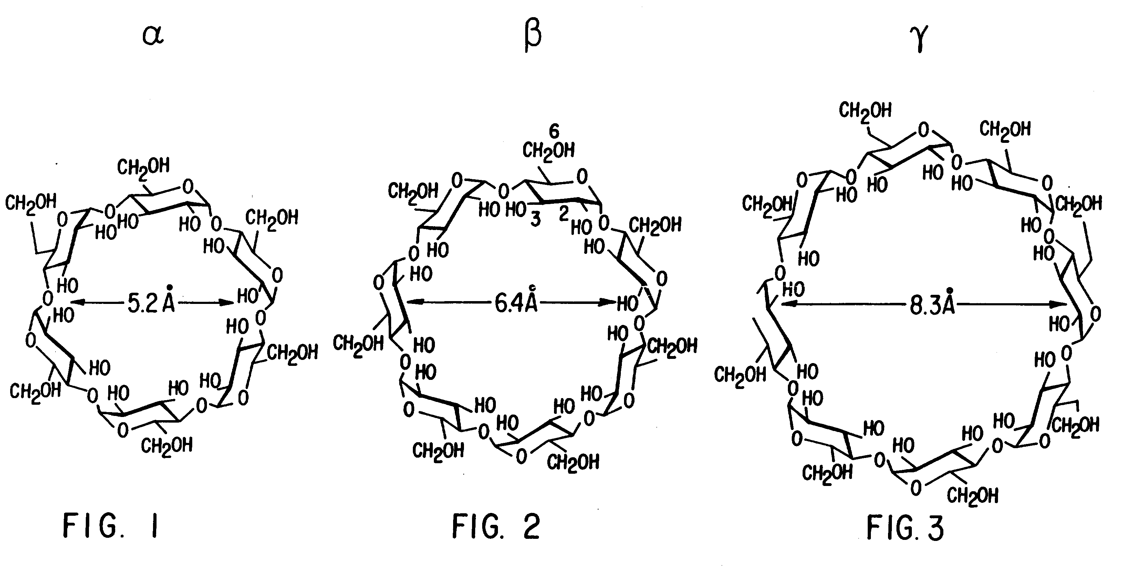

The usefulness of derivatives of polysaccharides which assume random coil conformation depends primarily on their average degree of substitution and is only slightly affected by differences in substitution patterns. Polysaccharide derivatives with an ordered conformation and derivatives of cyclic oligosaccharides (e.g., α-, β-, or γ-cylcodextrins, see Figs. 1-3), which are de facto ordered by the presence of a cycle, present a different problem; there the substitution pattern may profoundly affect their usefulness. The shape of cyclodextrins is a toroid, on the narrower side of the toroids (due to perspective distortion the outside of macrocycles in Figs. 1-3) are located all primary hydroxyls and on the wider sides are located the secondary hydroxyls. Thus, substitution on the secondary hydroxyls puts the substituents close to the wider entry of the cavity of the toroid, whereas substitutions on the primary hydroxyls puts the substituents close to the narrower entry. The principal use of cyclodextrins is in inclusion complexation wherein a guest lipophilic compound is accepted into the toroidal cavity of the host compound, i.e., of the cyclodextrin. This process is bound to be affected by specific changes at the entry sites of the host molecule. That was well demonstrated using chemically pure cyclodextrin derivatives. These compounds were prepared by multi-step synthesis requiring multiple extensive purifications and thus are available only in small quantities and at a great price. In many applications the chemical purity (individuality) of cyclodextrin derivatives is not required or may even be of a detriment. Using mixtures of cyclodextrins is often preferred since these usually do not crystallize and thus have much higher solubilities and are also better suited as coatings.

Cyclodextrins of the structures depicted in Figs. 1-3, corresponding to α, β and γ configuration, similar to other carbohydrates, react with epoxides yielding mixtures of oligosubstituted hydroxylalkylcyclodextrins. The latter compounds were first disclosed in a patent (Gramera and Caimi, Cyclodextrin Polyethers and Their Production, U.S. Patent 3,459,731, Aug. 5, 1969); alkali catalyzed heterogenous reaction in a pressure vessel was used in that work. Later these mixtures were prepared by reaction of epoxides with cyclodextrins in a homogenous reaction in aqueous alkali and the products found eminently useful for pharmaceutical purposes (see, Pitha, Administration of Sex Hormones in the Form of Hydrophilic Cyclodextrin Derivatives, U.S. Patent 4,596,795, June 24, 1986; Pitha, Pharmaceutical Preparations Containing Cyclodextrin Derivatives, U.S. Patent 4,727,064, Feb. 23, 1988; B.W.W. Muller and U. Brauns, European Patent Application No. 115,965, 1983; B.W.W. Muller, Derivatives of gamma-cyclodextrin, U.S. Patent 4,764,604, Aug. 16, 1988 and European patent application 86200334.0; and B. W.W. Muller and U. Brauns, Int. J. Pharm. 26, 77, 1985; B. W.W. Brauns, J. Pharm. Sci. 75, 571, 1986). Hydroxyalkylcyclodextrins were also prepared by reaction of cyclodextrins with ethylene or propylene carbonate catalyzed by potassium carbonate (R.B. Friedman, Modified Cyclodextrins, abstract B6 of the 4th International Symposium on Cyclodextrins, April 1988, Munich, West German and German DE 3712246. Furthermore, preparation of mixed alkyl and hydroxyalkylcyclodextrins was the subject of (L. Brandta and U.H Felcht, European Patent Applications EP146,841 and EP147,685 which correspond to U.S. Patents Nos. 4,582,900 and 4,638,958, respectively. The '900 and '958 patents do not contain any data on distribution of substituents.

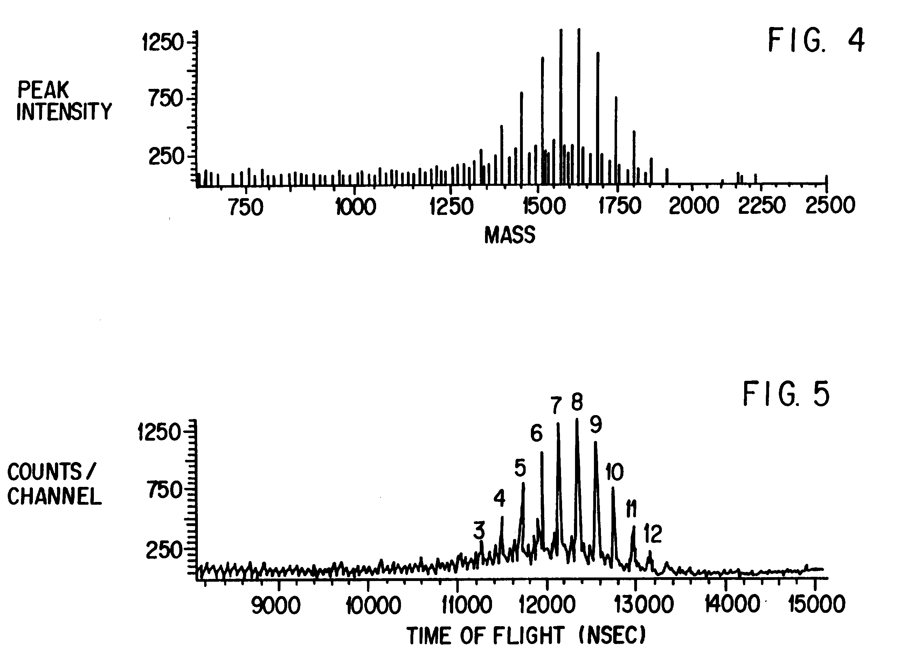

The multicomponent mixtures of hydroxyalkylcyclodextrins could be characterized using mass spectrometry, as far as number of substituent per cyclodextrin is concerned (see Figs. 4-5). Each of the peaks in such a spectrum corresponds to a certain degree of substitution, but since there is a great number of possible isomeric compounds at any degree of substitution, the mixtures are only partially characterized by direct mass spectrometry. An advance in characterization was obtained by hydrolysis of hydroxypropylcyclodextrin mixtures and evaluation of the hydroxypropylglucose mixtures thus obtained by mass spectrometry (T. Irie, K. Fukunaga, A. Yoshida, K. Uekama, H.M. Fales, and J. Pitha, Pharmaceut. Res. 5,713-717, 1988). These results show that the substituents in hydroxypropylcyclodextrins are not evenly distributed between the glucose residues. A large number of hydroxyalkylcyclodextrins has been prepared and characterized in this manner and the average degree of substitution was found to depend primarily on the ratio of reagents used. These quite diverse reaction conditions yielded mixtures with a rather similar distribution of degree of substitution (Pitha et al., Int. J. Pharm . 29: 73-82, 1986; Irie et al., Pharmaceut. Res. 5: 713-717, 1988). Consequently, the reaction conditions (i.e., strength of alkali added) were chosen primarily on the basis of convenience of manipulation of the mixtures. In different protocols (Pitha et al., Int. J. Pharm. 29: 73-82, 1986; Irie et al., Pharmaceut. Res. 5: 713-717, 1988) the concentration of sodium hydroxide solution, which is used as a solvent for the other component, ranged between 5-17% W/W. At concentrations lower than these, the reaction proceeds sluggishly, at higher concentrations the solubility of β-cyclodextrin decreases and also the removal of sodium hydroxide after the reaction becomes tedious. Thus, in production of hydroxyalkylcyclodextrins the practical range of the concentrations of sodium hydroxide solution used as a solvent were 5-17% and there was no incentive to venture outside of this range.

In the preparation of monosubstituted cyclodextrins, the ability of the cyclodextrins (host compounds) to form crystalline complexes of low solubility with a variety of organic compounds (guest compounds) is well known. For example, F. Cramer and F.R. Henglein (Chem. Berichte 90, 2561-1571, 1957) described 50 examples of complexes of parent cyclodextrins; nevertheless, this ability has not been used to fractionate cyclodextrin derivatives.

Techniques used to replace hydroxy groups with amino groups using heterogenous catalysts were the subject of many publications and patents, and amino derivatives of polyethylene and propylene glycols are currently made by a similar process on an industrial scale (E.L. Yeakey, U.S. Patent No. 3,654,370). A similar replacement has not been attempted on cyclodextrins. The only instance when cyclodextrins were treated with heterogenous catalyst (Raney nickel) was in the preparation of cyclodextrins deutereated on carbon atoms (Y. Kuroda, M. Yamada, and I. Tabushi, Tetrahedron Lett. 29, 4467-4470, 1988. Cyclodextrin sulfates have been known for a number of years (e.g., J. Hamuro and M. Akiyama, Japan Kokai 75 36 422, 1975, Chem. Abst. 83, 29026v, 1977; S. Bernstein, J.P. Joseph, and V. Nair, U.S. Patent No. 4,020,160, 1977) and in all their preparations principally similar methods have been used. The only factor requiring investigation in the preparation of hydroxypropylcyclodextrin sulfates was to find out whether the presence of the substituent in question would lead to a partial decomposition which would then lead to an unremovable and unacceptable coloration in the products.

### SUMMARY OF THE INVENTION

According to a first aspect of the present invention, a process for increasing the solubility of a cyclodextrin in water comprises reacting a cyclodextrin with ammonia under heterogeneous catalytic conditions by exposing the cyclodextrin to Raney nickel.

Further, by proper selection of preparative conditions (defined in claim 3), mixtures of cyclodextrin derivatives with a specific pattern of substitution can be obtained.

According to a second aspect of the present invention, a composition comprises at least one cyclodextrin, ammonia and Raney nickel.

### BRIEF DESCRIPTION OF THE DRAWINGS

Figures 1, 2 and 3 depict the structure of α-, β- and γ- cyclodextrin, respectively. The inside of the macrocycles is the non-polar cavity into which the guest compound enters. In the projection depicted, the wider opening/side of the cavity is represented by the inside part of the macrocycle.

Figures 4 and 5 show the mass spectrum of a hydroxypropyl-β-cyclodextrin mixture.

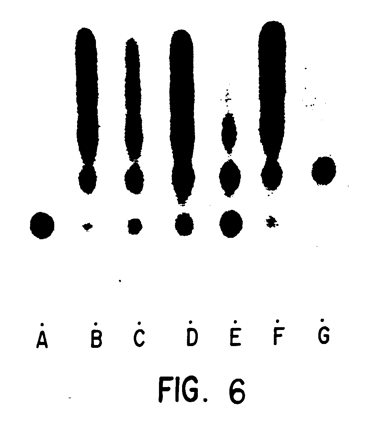

Figure 6 shows a thin layer chromatogram of the (S)-2-hydroxypropyl derivatives obtained upon reaction of β-cyclodextrin with propylene oxide using different bases as catalysts: (A) β-cyclodextrin; (B-F) reaction products using different bases as catalysts (B, LiOH; C, NaOH; D, KOH; E, Ba(OH)₂; F, NMe₄OH) ; (G) standard 2-O-[(S)-2'-hydroxypropyl]-β-cyclodextrin. Precoated silica gel plate (60F₂₅₄, Merck Co.) was used and developed by 1-propanol-water-ethyl acetate-ammonium hydroxide, 6:3:1:1). Visualized by heating the plate stained by immersion into Vaughn's reagent (solution of ammonium molybdate, 24 g, and ceric sulfate, 1 g, in aqueous sulfuric acid, 10%, 500 ml).

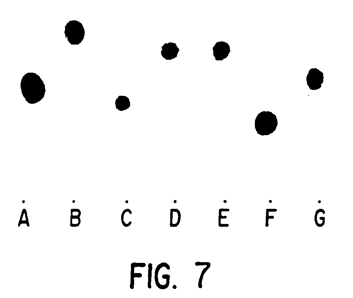

Figure 7 shows a thin layer chromatogram of cyclodextrins and the products of their monoalkylation with propylene oxide (aqueous 1.5% NaOH used as solvent and catalyst): (A) α-cyclodextrin; (B) mono[(S)-2'-hydroxypropyl]-α-cyclodextrin; (C) β-cyclodextrin; (D) 2-O-[(S)2'-hydroxypropyl]-β-cyclodextrin; (E) 2-O-[(R)-2'-hydroxypropyl]-β-cyclodextrin; (F) γ-cyclodextrin; (G) mono[(S)-2'-hydroxypropyl]-γ-cyclodextrin. For experimental conditions see Fig. 6.

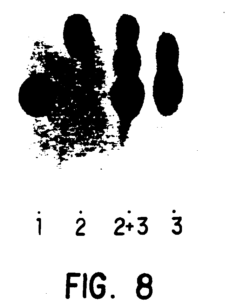

Figure 8 shows a thin layer chromatogram of the reaction products of β-cyclodextrin with S-(-)-propylene oxide catalyzed by 30% W/W aqueous sodium hydroxide, path noted by 3; 2-O-[(s)-2'-hydroxypropyl]-β-cyclodextrin, path 2; β-cyclodextrin, path 1; a mixture of 2 and 3, path 2 + 3. For experimental conditions see Fig. 6.

### DETAILED DESCRIPTION OF THE INVENTION

Since the chemically individual derivatives of cyclodextrins, like cyclodextrins, have a problem of low solubility, a procedure was developed for simple chemical conversion to more soluble compounds, a procedure applicable to both cyclodextrins and their derivatives. The procedure consists of the reaction of cyclodextrins with amines under heterogenous catalysis and is described in Example 18. While only the combination of 2-O-[(S)-2-hydroxypropyl]-β-cyclodextrin, ammonia, and Raney nickel is described presently, the applicability is not limited only to these compounds.

The use of controlled basic reaction conditions provides directed substitution at specific sites: (1) toward hydroxyls 2 or 2,3 of glucose residues with little substitution or (2) toward hydroxyls 6 and 2 with the former strongly predominating.

Samples of hydroxypropylated β-cyclodextrin were prepared by reacting β-cyclodextrin with propylene oxide in aqueous sodium hydroxide (Examples 1-7). The reaction conditions used in these preparations are summarized in Table 1. In the preparation described in Example 8 anhydrous conditions were used with sodium methylsulfinylmethanide in dimethylsulfoxide as catalyst and solvent, respectively. In order to determine the distribution of substituents between the different positions in the α-D-glucopyranosyl residues of β-cyclodextrin, each product was permethylated (Example 9), hydrolysed, and the resulting glucose ethers reduced, acetylated, and analyzed as alditol acetates, by gas liquid chromatography (Example 10).

There are several points to be clarified before the results are evaluated. Etherification with propylene oxide is a complicated reaction. When racemic propylene oxide is used, diastereomeric ethers are formed, which are only partially separated by the analytical method used. In order to fully address this complication three samples (Examples 1-3) were prepared using racemic propylene oxide, whereas in Examples 4-8 (S)-propylene oxide was used, which is bound to yield a simpler pattern. Another complication is that the oxiran ring in propylene oxide can be opened either by attack on C-1, which is the predominating reaction and gives a 2-hydroxypropyl ether, or on O-2, giving a 2-(1-hydroxypropyl) ether. Two derivatives of the latter type were observed in the present study. The third type of complication is due to the introduction of additional hydroxyls by the substituent. Fortunately, the secondary hydroxyl of the 2-hydroxypropyl group should not be very reactive, and alkylation in this position should consequently not be very important. Nevertheless, small amounts of such derivatives were observed.

The results of the analyses are summarized in Table 2. Conventional abbreviations were used-e.g., S₂ denotes mono-substitution on O-2, S₂₂₆ denotes bi-substitution on 0-2 (by -CH₂-(CH₃)-CH-O-CH₂-CH (OCH₃)-CH₃ group) and mono-substitution on 0-6; glucose-derived numbering was used for alditols. In some analyses, undermethylation, especially in the 3-position, was observed. The products, however, were identified from their mass spectra, and the molar percentages added to those of the corresponding fully methylated components. Two 2-(1-methoxypropyl) ethers were observed with this group in the 2- and the 6-position of a glucosyl residue, respectively. The yields of these ethers were 2-4% of the corresponding 1-(2-methoxypropyl) ethers, and reflects the relative reactivities at the primary and the secondary position of propylene oxide, respectively.

The relative reactivities at the three different positions in the D-glucopyranosyl groups may be determined from the molar percentages of the ethers. Sperlin equations (H.M. Sperlin, in E. Ott, H.M. Sperlin and M.W. Grafflin (Eds.) Cellulose and Cellulose Derivative, Part II, Interscience, New York, 1954, pp. 673-712) were used to determine the relative reactivities, k₂, k₃ and k₆, from the distribution of the substituents. The results in Table 2 can thus be reduced to those three parameters (Table 3). The value for k₃ concerns the relative reactivity at O-3 when O-2 is not alkylated. Further calculations indicate that the reactivity at O-3 is considerably enhanced when O-2 becomes alkylated, but the values are inaccurate and are not reported. The reactivity at the hydroxyl groups introduced on 2-hydroxypropylation is low and has not been calculated.

From the results given in Table 3 it is evident that the relative reactivities at O-2 and O-3 are rather independent of the alkali concentration during the etherification. The relative reactivity of O-6 versus O-2, however, varies from approximately 1:5 at low alkali concentration to 7:1 at high alkali concentration. For the reaction promoted by sodium methylsulfinylmethanide in dimethyl sulfoxide, the alkylation in the 6-position is even more favored. These drastic changes in the reactivity of O-6 are the basis for the regiospecificity observed at extremely low or high alkali concentrations, a phenomenon which is the subject of the present invention.

All three of the cyclodextrins (Fig. 1) can be substituted in a specific manner if controlled basic conditions are used. This is documented by the similarities seen in the distributions of products of α-, β-, and γ-cyclodextrins (Table 4). The data there consist of results obtained with α-cyclodextrin (Example 11), β-cyclodextrin (Examples 1-10), and γ-cyclodextrin (Example 2); in all these reactions propylene oxide was used as an alkylating agent. It may be noted that α-cyclodextrin, in difference to β- and γ-homolog, forms a crystalline compound with propylene oxide; nevertheless, that had only minor effects on the course of the reaction.

To evaluate the effects of the ratio of cyclodextrin to propylene oxide used in condensation, a factor which regulates the average degree of substitution in products, the experiment described in Example 13 was performed. Catalysis by low sodium hydroxide concentration (1.5%) was used and a product with an average degree of substitution of 6.6 was obtained. The composition of that product was compared with that of previously obtained product (Examples 1-10), having an average degree of substitution 2.0 (Table 5). Comparison shows that substitution in position 2 remains predominant. The only distinct difference observed was the pronounced disappearance of the product monosubstituted in position 3 as the reaction progressed. This obviously had to be due to the high reactivity of that compound to propylene oxide.

Controlled basic conditions in the condensation reaction can be obtained using various hydroxides. Equinormal lithium, potassium, tetramethylammonium, and barium hydroxide were used in Example 14, respectively. Analytical composition of the products, summarized and compared with those obtained using sodium hydroxide catalysis in Table 6, show only minor differences. Qualitative assessment by thin layer chromatography (Fig. 6) indicates that the mixture obtained by barium hydroxide catalysis is remarkably simple.

To obtain monosubstituted cyclodextrin derivatives, large excesses of cyclodextrins were used in condensation reactions with epoxides. These conditions led to mixtures consisting principally of the starting cyclodextrin and of its monosubstituted product. These mixtures were easier to separate than mixtures containing oligosubstituted products. Preparation of monosubstituted β-cyclodextrin is described in Example 15, and shown in Table 7. (S) -Propylene oxide, (R)-propylene oxide, and (R,S)-propylene oxide and catalysis by low alkali concentration were used. In this case the substitution occurred in the O-2 position of cyclodextrins (Table 8); all three products were crystalline. Preparation of monosubstituted α- and γ-cyclodextrin described in Example 5 and Table 7 yielded products which were about equimolar mixtures of compounds carrying substituents on the 2-O- and 3-O-positions (Table 5) and separable only by chromatography. These products were amorphous. The difference between β-cyclodextrin and, on the other hand, α-and γ-cyclodextrin is probably due to the very low solubility and good crystallization ability of 2-O-(2-hydroxypropyl)-β-cyclodextrin, enabling easy isolation. The corresponding derivative substituted in position 3 probably remained in the mother liquor. The thin layer chromatogram of the monosubstituted product is shown in Fig. 7.

To document that a product monosubstituted in position 6 can be prepared analogously, the reaction described in Example 16 was performed. β-cyclodextrin was condensed with (S)-propylene oxide using a high concentration of alkali. The monosubstituted product in that case, when toluene was used as a complexing agent, coprecipitated with β-cyclodextrin. From mass spectrum of the reaction mixture and comparison of the thin layer chromatography properties of authentic 2-O-substituted product (Fig. 4) it is obvious that the product is different from 2-O-(2-hydroxypropyl)-β-cyclodextrin. On the basis of the data in Examples 1-10, the product has to be 6-O-(2-hydroxypropyl)-β-cyclodextrin.

To document that the processes developed are applicable when other epoxides are used, the condensation of (S)-glycidol with β-cyclodextrin catalyzed by a low alkali concentration was performed (Example 17). The crystalline 2-O-(2,3-(S)-dihydroxypropyl)-β-cyclodextrin was isolated without difficulty.

The examples 1 to 17 are not illustrations of the claimed invention but are to be considered as preparative examples of compounds which are intermediates for the preparation of the claimed products.

### Example 1

### Preparation of Hydroxypropyl-β-cyclodextrin

β-Cyclodextrin (200 g of hydrate corresponding to 173.2 g anhydrous and 0.153 mole) was dissolved with stirring in warm (60°C) solution of sodium hydroxide (61.2 g or 0.53 mole in 300 ml of distilled water, i.e., 16.9% W/W). The solution was placed into round flask, cooled to ice bath temperature and after attachment of reflux condenser containing dry ice-acetone mixture, propylene oxide (25 ml, 23.2 g, 0.40 mole) was added dropwise with constant stirring. Stirring was continued for 3 hrs at ice bath temperature and overnight at room temperature. Then the mixture was neutralized with concentrated hydrochloric acid and evaporated in vacuo to a consistency of thick syrup, which was added to 1 liter of ethanol (190 proof). After several hours of stirring the insoluble sodium chloride was filtered off and washed with ethanol (190 proof, 200 ml). The ethanolic solutions were evaporated in vacuo, the residue dissolved in distilled water (300 ml) and dialyzed for 5 hrs at 0°C against several charges of distilled water. The retained fraction was freeze-dried and the resulting powder stirred with acetone (1.5 liter) for one day. The acetone was decanted and residue stirred with additional acetone (1 liter) again for one day and the precipitate of hydroxypropyl-β-cyclodextrin filtered off and dried for 2 hrs in vacuo. Acetone solutions upon evaporation yielded oily residue (3 g) principally oligopropyleneglycols. The dried powder of hydroxypropyl-β-cyclodextrin was dissolved in distilled water (300 ml) and the solution freeze-dried to yield a white powder (98 g).

### Example 2

### Preparation of Hydroxypropyl-β-cyclodextrin

β-Cyclodextrin (200 g hydrate, i.e., 173 g anhydrous, 0.153 mole) was, as in Example 1, dissolved in a solution of sodium hydroxide (85 g, 2.12 mole in 400 ml distilled water, i.e., 17.5% W/W/) and in the same manner as in Example 1, treated with propylene oxide (150 ml, 125 g, 2.152 mole). Using processing analogous to that in Example 1, the fraction of oligopropylene glycols amounted to 38 g, while altogether 193 g of hydroxypropyl-β-cyclodextrin was obtained.

### Example 3

### Preparation of Hydroxypropyl-β-cyclodextrin

β-Cyclodextrin (500 g hydrate, i.e., 432 g anhydrous, 0.382 mole) was dissolved as in Example 1, in a solution of sodium hydroxide (45 g, 1.1 mole in 750 ml distilled water, i.e., 5.7% W/W) and under the same conditions as in Example 1, treated with propylene oxide (260 ml, 217 g, 3.73 mole). The reaction mixture was left for five hours in an ice bath and kept at room temperature for two days. After processing similar to that described in Example 1, including extraction of oligopropylene glycols with acetone, a white powder of hydroxypropyl-β-cyclodextrin (490 g) was obtained.

### Example 4

### Preparation of (S)-Hydroxypropyl-β-cyclodextrin

β-Cyclodextrin (13.3 g of hydrate, i.e., 11.5 g anhydrous, 0.010 mole) was dissolved in a solution of sodium hydroxide (0.822 g, 0.0206 mol in 54 ml distilled water, i.e., 1.5%) by stirring at 60°C. The increased amount of alkaline solution used was necessitated by the low solubility of β-cyclodextrin at very low (present case) or very high (50%) concentration of sodium hydroxide. The solution was cooled in an ice bath and in the same manner as in Example 1, (S)-propylene oxide (10 ml, 8.29 g, 0.143 mole), a commercial preparation obtained from Aldrich Chemical Co., was added. The reaction mixture was kept overnight at 0-5°C and thereafter for 4 hrs at room temperature. Then the mixture was neutralized with sulfuric acid (10%) to pH 7.5 and evaporated to dryness. Since the product is not well soluble either in ethanol or in water, the residue, after evaporation, was suspended in distilled water (100 ml) and dialyzed against distilled water for 5 hrs at room temperature. The retained suspension was evaporated to dryness, yielding a white powdery product (14.23 g).

### Example 5

### Preparation of (S)-hydroxypropyl-β-cyclodextrin

β-Cyclodextrin (13.3 g of hydrate, i.e., 11.5 g anhydrous, 0.010 moles) was dissolved in a process as described above in a solution of sodium hydroxide (1.35 g, 0.034 moles in 27 ml distilled water, i.e., 4.8%) and treated in the manner described in Example 1 with (S)-propylene oxide (10 ml, 8.29 g, 0.143 moles). The reaction mixture was kept overnight at 0-5°C and thereafter for 3 hrs at room temperature. After neutralization with diluted sulfuric acid (10%) the solution was evaporated in vacuo nearly to dryness and the residue was stirred with ethanol (100 ml, 190 proof) for 30 min. After filtering off the insoluble sodium sulfate, the ethanolic extracts were evaporated to dryness, dissolved in distilled water (35 ml), and dialyzed against distilled water for 3 hrs at 0°C. Evaporation of the retained material yielded a white powder of (S)-hydroxypropyl-β-cyclodextrin (17.3 g).

### Example 6

### Preparation of (S)-Hydroxypropyl-β-cyclodextrin

β-Cyclodextrin (13.3 g hydrate, i.e., 11.5 g anhydrous, 0.010 moles) was dissolved as in Example 1, in a solution of sodium hydroxide (5.53 g, 0.13 moles in 27 ml distilled water, i.e., 17.0%) and treated in the manner described in Example 1 with (S)-propylene oxide (10 ml, 8.29 g, 0.143 moles). The same isolation procedure as in Example 5 yielded a white powder of (S)-2-hydroxypropyl-β-cyclodextrin (17.9 g).

### Example 7

### Preparation of (S)-Hydroxypropyl-β-cyclodextrin

β-Cyclodextrin (8.02 g hydrate, 6.93 g anhydrous, 6.1 mmoles) was added to a solution of sodium hydroxide (13.955 g, 0.349 moles in water 32.6 ml, i.e., 30%) and dissolved by stirring and heating to 70°C to a clear yellowish solution. Then the mixture was cooled in an ice bath and to the solution which remained homogenous was added, while stirring, (S)-propylene oxide (5 g, 0.086 moles). After neutralization, evaporation, ethanol extraction, and dialysis all performed as in Example 5, a white powdery product (9.22 g) was obtained.

### Example 8

### One Pot Preparation of Permethyl (S)-Hydroxypropyl-ß-cyclodextrin

Sodium hydride (5.51 g of 80% dispersion in mineral oil, i.e., 0.31 moles) was added to anhydrous dimethyl sulfoxide (65 ml) and left to react at 60°C with stirring under argon for 1 hr. Then anhydrous β-cyclodextrin (10 g, 0.088 mole) dissolved in anhydrous dimethyl sulfoxide (65 ml) was added, stirred for 3 hrs at room temperature and to this solution then a solution of (S)-propylene oxide (2.05 g, 0.035 mole) in dimethyl sulfoxide (10 ml) was slowly added. The reaction mixture was stirred for 15 hrs at room temperature. Thereafter, methyl iodide (26 ml) was added dropwise (ice bath cooling) and the mixture stirred for one day at room temperature. After decomposition with water (100 ml) the product was extracted with chloroform (2 x 150 ml). Chloroform extracts were washed with water (100 ml), saturated sodium chloride, and evaporated. The residue was partitioned between water (25 ml) and diethyl ether (2 x 100 ml). Ethereal extracts were washed with water (20 ml), dried with anhydrous sodium sulfate, filtered through aluminum oxide (8 g), and evaporated to yield a product in the form of a pale yellow syrup (10.2 g).

### Example 9

### Permethylation of Hydroxypropyl-β-cyclodextrins

All the procedures used were similar to the following: sodium hydride (2.1 g, of 80% dispersion in mineral oil, i.e., 0.07 moles) was added to anhydrous dimethyl sulfoxide (20 ml) under argon and the mixture heated for 1 hr to about 60°C. Thereafter, well dried (3 hrs, 110°C) hydroxypropyl-β-cyclodextrin (4 g) dissolved in dimethyl sulfoxide (15 ml) was added and left to react, under argon and while stirring at room temperature, for an additional 3 hrs. Then the reaction mixture was cooled in an ice bath and methyl iodide (10 ml, 0.161 moles) added dropwise. After another hour at ice bath temperature the mixture was left stirring overnight. Then water (24 ml) was added while cooling and the product extracted twice by chloroform (total 90 ml). The chloroform extract was washed with water (20 ml) and evaporated. The residue was treated with water (25 ml) and three times extracted with ether (total 75 ml), the ether extracts washed with water, and evaporated. The residue was dissolved in ether (100 ml), stirred for 30 min with neutral alumina, filtered, and evaporated, yielding 3.7 g of permethylated product.

### Example 10

### Analysis of Permethyl Derivatives of Hydroxypropyl-β-cyclodextrins

1 The permethylated product (3 mg) was dissolved in 1M aqueous trifluoroacetic acid (0.5 ml), kept in a screwcap tube at 100°C overnight and concentrated by flushing with air. The residue and sodium boroanhydride (10 mg) were dissolved in 1M aqueous ammonia (0.5 ml) and kept at room temperature for 1 hr. The solution was acidified with 50% acetic acid (2 drops) and concentrated. Boric acid was removed by codistillation first with acetic acid-methanol (1:9, 5 ml) and then with methanol (25 ml). The residue was treated with acetic anhydride and pyridine (2:1, 0.5 ml) at 100°C for 30 min, concentrated, and partitioned between chloroform and water (2:1, 6 ml). The chloroform phase was concentrated and the residue analyzed by g.l.c. and g.l.c.-m.s.

G.l.c. was performed on a Hewlett Packard 5830 A instrument fitted with a flame ionization detector, with hydrogen as the carrier gas. G.l.c.-m.s. was performed on a Hewlett Packard 5790-5970 system with helium as the carrier gas. A Hewlett Packard Ultra 2 (cross-linked 5% phenyl methyl silicone) fused silica, capillary column (25 m, 0.20 mm i.d.) was used. Temperature program: 8 min at 185°C, →250°C at 5° per min, 250°C for 10 min.

### Example 11

### Preparation of (S)-2-Hydroxypropyl-α-cyclodextrin mixture.

α-Cyclodextrin (5.41 g hydrate, equivalent to 4.87g anhydrous, i.e., 5 mmol) was dissolved in aqueous sodium hydroxide (5%, 14.2 g), the solution cooled in an ice bath, and (S)-propylene oxide (3.48 g, 60 mmol) was added slowly. During the addition, a precipitate of propylene oxide, α-cyclodextrin complex, formed temporarily. The stoichiometry of that complex (determined by nuclear magnetic resonance spectra) was close to 1:2. The mixture was stirred at 0°C for 6 h and at room temperature for 11 h. Then after neutralization by hydrochloric acid and dialysis against distilled water for 5 h the retained product was isolated by evaporation, yielding 5.1 g of white powder.

For analysis of the substitution pattern the product (2.5 g) was fully methylated by a methyl iodide:dimethyl sulfoxide:sodium hydride procedure as described in Examples 1-10. After short column chromatography (methylene chloride-methanol, 20:1, as eluent) permethylated derivative (2.96 g) was obtained. The fully methylated derivative was hydrolyzed, reduced, acetylated, and the resulting mixture analyzed by gas-liquid chromatography:mass spectrometry.

### Example 12

### Preparation of (S)-2-Hydroxypropyl-γ-cyclodextrin mixture.

γ-Cyclodextrin (15.05 g hydrate, i.e., 12.97 anhydrous, 10 mmol) was dissolved in aqueous sodium hydroxide (5% W/W, 28.4 g), the solution was cooled in an ice bath, and (S)-propylene oxide (9.3 g, 160 mmol) was added to it slowly. The solution became hazy and remained thus for the next 6 h while it was stirred in the ice bath. Thereafter, warming to room temperature resulted in a complete clarification. After an additional 39 h of stirring the mixture was neutralized and dialyzed as in Example 11. The retained solution was evaporated under reduced pressure to yield a thick syrup which upon coevaporation with ethanol (190 proof, 2 x 100 ml) gave a white foam. That was stirred with ethyl acetate (75 ml) for 30 min, filtered, dried, and lyophilized to obtain a white amorphous powder of the product (yield 18.5 g). The degree of substitution calculated from nuclear magnetic resonance spectrum was 10.9 and from ²⁵²Cf plasma desorption mass spectrum was 9.9.

The preparation of permethylated derivative and its analysis was performed as in Example 11.

### Example 13

### Preparation of (S)-2-Hydroxypropyl-β-cyclodextrin mixture.

β-Cyclodextrin (2.3 g hydrate, i.e., 2 g anhydrous, 1.76 mmol) was dissolved in aqueous sodium hydroxide (1.5% W/W, 9.4 g) by stirring at 60°C. The solution was cooled in an ice bath and (S)-propylene oxide (2 g, 34.4 mmol) was slowly added. After 5 h an ice bath reaction was left to proceed for 36 h at room temperature and processed as in Example 11 to yield 2.8 g of product. The average degree of substitution by nuclear magnetic resonance spectroscopy was 7.6, by ²⁵²Cf plasma desorption mass spectrometry 8.6. The sample of the product was permethylated and analyzed by the procedure as described in Example 11.

### Example 14

### Effect of cations on the base catalyzed alkylation of β-cyclodextrin with propylene oxide.

β-Cyclodextrin (6.44 g, corresponding to 5.60 g of anhydrous compound, 4.94 mmol) was dissolved in each case in 25 ml of a 0.4 N base solution (the bases used were LiOH, NaOH, KOH, Ba(OH)₂, and NMe₄OH) by warming at 60°C for 15 min. The clear solution was cooled in an ice bath and S-(-)propylene oxide (4.06 g, 70 mmol) was introduced over a 30 min period. The mixture was stirred in an ice bath for 12 h and then at room temperature for 4 h. The mixture was then neutralized with hydrochloric acid and dialyzed against distilled water for 6 h at room temperature. The retained solutions were evaporated under reduced pressure and the residues dried in vacuum, yielding between 6.2 and 6.9 g of products which were analyzed as described in Example 11.

### Example 15

### Mono(2-hydroxypropyl)cyclodextrins.

The respective cyclodextrin was dissolved in 1.5% W/W NaOH solution by stirring at room temperature (at 60°C in case of β-cyclodextrin) for 20 min. The solution was cooled in an ice bath and propylene oxide was introduced over a period of 1 h (the flask was equipped with a condenser containing a mixture of acetone-dry ice). The mixture was stirred in the ice bath for 5-10 h and then at room temperature for 8-10 h. The exact quantities of the reactants and the reaction conditions are summarized in Table 4. The reaction mixture was cooled in an ice bath and neutralized with hydrochloric acid. To isolate the respective products, different procedures were used as described in detail below.

### Mono[(S)-2-hydroxypropyl]-α-cyclodextrin.

α-Cyclodextrin, which precipitated upon cooling and neutralization of reaction mixture, was filtered off. The filtrate was concentrated to about 200 ml, and then dialyzed for 6 h at room temperature against distilled water. The retained solution was diluted to 550 ml and stirred with cyclohexane (60 ml) for 24 h. The precipitated complex of α-cyclodextrin and cyclohexane was filtered off, the filtrate concentrated to 130 ml, and again stirred with cyclohexane (30 ml) for 10 h and then filtered. The filtrate was decolorized with charcoal (norit, 9 g) at 60°C. Thin layer chromatography of the colorless solution showed some α-cyclodextrin was still to be present. The solution was concentrated to 35 ml, stirred once again with cyclohexane (10 ml) for 5 h, and filtered. The filtrate was evaporated and the residue dried by coevaporation with absolute ethanol (2 x 50 ml) to obtain the product R_{f} 0.28 (1-propanol-water-ethyl acetate-ammonium hydroxide, 6:3:1:1), Fig. 8. MS (²⁵²Cf) m/e 1053.1 (M + Na⁺). The mass spectrum shows that there is a contamination (14%) by bis substituted compound m/e 1111.0 (M + Na⁺). MS (FAB+) m/e 1053.3 (M + Na⁺), impurity of bis substituted compound, m/e 1111.3 (M + Na⁺). ¹H-NMR (D₂O) δ 5.28-5.18 and 5.15-4.97 (m, 6H, H-1), 4.16-3.42 (m, 39H), 1.16 (d, J=6.4 Hz, 3H, CH₃). Anal. for C₃₉H₆₆O₃₁ · 7H₂O; calcd. C 40.45, H 6.91; found C 40.37, H 6.58. The solubility of the compound in water was found >50%.

### 2-O-[(S)-2'-Hydroxypropyl]-β-cyclodextrin.

The suspension obtained upon cooling and neutralization of the reaction mixture was concentrated to 600 ml and dialyzed for 7 h at room temperature. The retained suspension (~700 ml) was stirred with toluene (10 ml) for 14 h, water (500 ml) was added, stirred for 15 min, and filtered. The residue was suspended in water (1.25 L), stirred for 1 h, and filtered. The combined filtrates were concentrated to 200 ml, refrigerated overnight, the solid was collected by filtration, and recrystallized from hot water to yield white crystals of the product. R_{f} 0.25 (1-propanol-water-ethyl acetate-ammonium hydroxide, 6:3:1:1), Fig. 6, m.p. 292-293°C. MS (FAB+) m/e 1193.2 (M + H⁺), 1210.3 (M + H₂O). MS (FAB-) m/e 1191.1 (M-H⁺), 1210.2 (M + H₂O). MS (²⁵²Cf) m/e 1215.8 (M + Na⁺). ¹H-NMR (D₂O) δ 5.30-5.23 and 5.17-5.05 (m, 7H, H-1), 4.16-3.40 (m, 45 H), 1.17 (d, J=6.42, 3H, CH₃). Anal. for C₄₅H₇₆O₃₆ · 3H₂O; calcd. C 43.30, H 6.58; found C 43.31, H 6.43. Solubility of this compound in water was found to be 3.2 mg/ml and was only insignificantly changed when excess of toluene was added to the aqueous phase.

The sulfatation of the title compound was performed as follows. Chlorosulfonic acid (0.4 ml) was added to pyridine (2 ml) while the temperature was kept under 10°C. Thereafter, a powder of anhydrous cyclodextrin derivative (0.2 g) was added, the mixture stirred for 1 h at 70°C, decomposed under cooling by water (4 ml), concentrated under reduced pressure, neutralized with sodium hydroxide, decolorized with activated charcoal (0.5 g), and dialyzed against water for 24 h. Evaporation of the retained solution yielded a colorless product (0.494 g). Elemental analysis results: C, 14.45%; H, 2.618%; S, 17.92%. Ratio of the sulfur to carbon contents is 1.24 which corresponds to the complete sulfatation of all hydroxyls. The solubility of the product in water was in excess of 50%.

### 2-O-[(R)-2'-Hydroxypropyl]-β-cyclodextrin.

The suspension obtained upon cooling and neutralization of the reaction mixture was filtered and both the residue and filtrate conserved. The filtrate was stirred with toluene (50 ml) for 12 h and filtered; the filtrate showed only a trace presence of the product on t.l.c. and was therefore discarded. The residue obtained initially was suspended in water (500 ml) and stirred with toluene (50 ml) for 12 h. Water (100 ml) was added, stirred for 1 h, filtered, the residue was washed with water (200 ml), and the combined filtrates were evaporated. Recrystallization of the residue from hot water (200 ml) afforded white crystals of the product, R_{f} 0.25 (1-propanol-water-ethyl acetate-ammonium hydroxide, 6:3:1:1), Fig. 6. M.p. 290-292°C; MS (FAB+) m/e 1193.2 (M + H⁺), 1210.3 (M - H₂O). MS (FAB) m/e 1191.3 (M - H⁺). MS (²⁵²Cf) m/e 1215.7 (M + Na⁺). ¹H-NMR (D₂O) δ 5.30-5.22 and 5.20-5.07 (m, 7H, H-1), 4.20-3.49 (m, 45H), 1.20 (d, j=6.24 Hz, 3H, CH₃). Anal. for C₄₅H₇₆O₃₆ · 5H₂O; calcd.: C 42.12, H 6.71; found C 41.94, H 6.88. The solubility of this compound in water was found to be 7.5 mg/ml.

### 2-O-[(RS)-2'-Hydroxypropyl]-β-cyclodextrin.

The work-up procedure was the same as that for (R)-diastereomer, R_{f} 0.25 (1-propanol-water-ethyl acetate-ammonium hydroxide, 6:3:1:1). M.p. >300°C. MS (²⁵²Cf) m/e 1215.6 (M + Na⁺). MS (FAB⁺) m/e 1193.3 (M + H⁺). ¹H-NMR (D₂O) δ 5.26-5.18 and 5.15-5.02 (m, 7 H, H-1), 4.20-3.42 (m, 45 H), 1.16 and 1.15 (d, j=6.42 Hz, 3H, CH₃). Anal. for C₄₅H₇₆O₃₆·5H₂O; calcd. C 42.12, H 6.71; found C 42.11, H 6.76. The solubility of the title compound in water was found to be 4.0 mg/ml.

### Mono(S-2'-Hydroxypropyl)-γ-cyclodextrin.

γ-Cyclodextrin, which precipitated upon cooling and neutralization of the reaction mixture, was filtered off and the filtrate stirred with p-cymene (55 ml) for 12 h. The precipitated complex was filtered off and the filtrate was concentrated to 200 ml and dialyzed for 6 h at room temperature. The retained solution was concentrated to 100 ml, stirred with p-cymene (20 ml) for 10 h, and filtered. The filtrate was decolorized with decolorizing charcoal, (norit, 9 g) at 60°C. The colorless solution was evaporated and the residue dried by coevaporation with absolute ethanol (2 x 50 ml) to obtain the title compound, R_{f} 0.21 (1-propanol-water-ethyl acetate-ammonium hydroxide, 6:3:1:1), Fig. 6. MS (²⁵²Cf) m/e 1377.8 (M + Na⁺). The mass spectrum shows that there is also contamination (18%) by disubstituted compound, m/e 1436.5 (M + Na⁺). MS (FAB⁺) m/e 1377.7 (M + Na⁺), impurity of disubstituted compound 1435.7 (M + Na⁺). Anal. for C₅₁H₈₆O₄₁·4H₂O; Calcd.: C 42.80, H 6.57; found C 42.82, H 6.60. The solubility of 5 in water was found to be >50%.

### Example 16

### 6-O-[(S)-2'-Hydroxypropyl-β-cyclodextrin.

β-Cyclodextrin (37.6 g, corresponding to 32.71 g anhydrous compound, 28.82 mmol) was dissolved in an aqueous solution of 30% W/W NaOH (144 ml), cooled in an ice bath and S-(-)-propylene oxide (2 g, 34.48 mmol) was over a 10 min period. After stirring for 10 h at ice bath temperature and then for 8 h at room temperature, the reaction mixture was neutralized (while cooling in an ice bath) with hydrochloric acid and the resulting suspension dialyzed for 8 h at room temperature against distilled water. The retained suspension (~700 ml) was filtered. The residue (18.55 g) was exclusively β-cyclodextrin and of the title compound. The complex was decomposed by boiling off with water (2 x 200 ml) under reduced pressure (60°C) to obtain a mixture of cyclodextrin and the product (16.4 g). Fig. 7 shows the comparative mobilities of 2 and 6 on t.l.c. (1-propanol-water-ethyl acetate-ammonium hydroxide, 6:3:1:1, was used as a developing system). While the compound which had the hydroxypropyl substituent on C-2 hydroxyl appears at R_{f} 0.25, the title compound which had the same substituent on C-6 hydroxyl appears distinctly at R_{f} 0.23. From the plasma desorption (²⁵²Cf, positive ion) spectrum, the ratio of β-cyclodextrin:monohydroxypropyl derivative:bis-hydroxypropyl derivative in the mixture appears to be 30:58:12.

### Example 17

### 2-O-[(S)-2',3'-Dihydroxypropyl]-β-cyclodextrin.

β-Cyclodextrin (26.45 g, corresponding to 23.01 g of anhydrous compound, 20.27 mmol) was dissolved in 1.5% W/W NaOH (100 ml) by stirring for 15 min, cooled in an ice bath, and added (S)-glycidol (1 g, 13.51 mmol) over a 15 min period. The mixture was stirred in an ice bath for 12 h and then at room temperature for 24 h. Then the mixture was cooled again in an ice bath, neutralized with hydrochloric acid to pH 7.0-7.5 and dialyzed for 7 h against distilled water. The retained solution was stirred with toluene (10 ml) for 24 h, the precipitated toluene complex of the unreacted β-cyclodextrin was filtered off (20.8 g), and washed with water (50 ml). The combined filtrates were evaporated to obtain crude product (5.69 g) which was recrystallized from hot water to obtain the pure title compound as colorless crystals (3.0 g), R_{f} 0.2 (1-propanol-water-ethyl acetate-ammonium hydroxide, 6:3:1:1). M.P. >300°C. MS (FAB⁺) m/e 1209.4 (M + H⁺). ¹H-NMR (D₂O) δ 5.25-5.22 (m, 1 H, H-1), 5.15-5.03 (m, 6 H, H-1), 4.15-3.47 (m, 47 H). The solubility of the product in water was found to be 12.0 mg/ml.

The compound was permethylated and that derivative subjected to hydrolysis, reduction, and acetylation. Analysis of the resulting alditol derivatives revealed the following molar percentages of glucose residues in the product: unsubstituted, 87.5; 2-O-substituted, 11.5; 3-O-substituted, 1.0. These results favorably compare with the calculated value: unsubstituted, 85.7%; 2-O-substituted, 14.3%.

### Example 18

### Reaction of 2-O-[(S)-2'-Hydroxypropyl]-β-cyclodextrin with ammonia catalyzed with Raney Nickel.

To a suspension of W-2 Raney Nickel (2 ml settled volume, Aldrich Chemical Co.) in concentrated ammonium hydroxide (8 ml) was added 2-O-[(S)-2'-hydroxypropyl]-β-cyclodextrin (300 mg) and the mixture was heated at 190-200°C in a steel bomb for 36 h. The mixture was then filtered, the catalyst washed with water (60 ml), and the filtrate dialyzed for 4 h. The retained solution was filtered through membrane filter (0.4 µ) and evaporated to yield an off-white solid (100 mg), R_{f} 0.19 (1-propanol-water-ethyl acetate-ammonium hydroxide, 6:3:1:1). Elemental analysis results: C, 44.01%; H, 7.04%; N, 2.22%. Ratio of nitrogen to carbon is 0.0504, i.e., close to two hydroxy groups were exchanged for amino groups. The solubility of the compound in water was 20 mg/ml.

### Reaction of β-cyclodextrin with Raney Nickel-ammonia.

The reaction was carried out under similar conditions as above using W-2 Raney Nickel (6 ml, settled volume), concentrated ammonium hydroxide (15 ml), and β-cyclodextrin (600 mg). Work up as above afforded an off-white solid (470 mg). Elemental analysis results: C, 44.10; H, 6.62; N, 2.52; ash content, 3.05%). Ratio of nitrogen to carbon is 0.0571. The solubility of the compound in water was 25 mg/ml.

**Table 1**

| Summary of Preparative Conditions of Hydroxypropyl-β-cyclodextrins | | | | | | | |
|---|---|---|---|---|---|---|---|
| | Examples | | | | | | |
| | 1 | 2 | 3 | 4 | 5 | 6 | 7 |
| sodium hydroxide solution used as a solvent (% W/W) | 16.9% | 17.5% | 5.7% | 1.5% | 4.8% | 17% | 30% |

| final reaction mixture (% W/W) | | | | | | | |
|---|---|---|---|---|---|---|---|
| sodium hydroxide | 10.4% | 10.5% | 2.9% | 1.1% | 2.7% | 10.3% | 23.4% |
| cyclodextrin (anhydrous) | 29.6% | 21.3% | 28.6% | 15.1% | 23.0% | 21.3% | 11.6% |
| propylene oxide | 4.0% | 15.4% | 14.4% | 10.9% | 16.6% | 15.4% | 8.4% |

| final reaction mixture (molar ratio) | | | | | | | |
|---|---|---|---|---|---|---|---|
| sodium hydroxide/ | 10.0 | 13.9 | 2.9 | 2.1 | 3.4 | 13.8 | 57.2 |
| propylene oxide/cyclodextrin | 2.6 | 14.1 | 9.8 | 14.3 | 14.3 | 14.3 | 14.1 |

**Table 2**

| Composition of Alditol Acetates in Mole % Obtained from various 2-Hydroxypropyl-β-cyclodextrin Preparations | | | | | | | | |
|---|---|---|---|---|---|---|---|---|
| | Examples | | | | | | | |
| Substitution pattern by 2-methoxypropyl groups | 1 | 2 | 3 | 4 | 5 | 6 | 7 | 8 |
| S₀ | 77.8 | 43.9 | 39.3 | 74.4 | 40.2 | 42.9 | 53.2 | 65.5 |
| S₀ non-methylated on 0-3 | -- | -- | -- | -- | 2.8 | 2.2 | -- | -- |
| Total non-substituted | 77.8 | 43.9 | 39.3 | 74.4 | 43.0 | 45.1 | 53.2 | 65.5 |
| S₂ | 5.2 | 10.9 | 30.3 | 14.6 | 23.0 | 8.4 | 3.1 | 2.3 |
| S₂ non-methylated on 0-3 | -- | -- | -- | -- | 0.6 | 0.2 | -- | -- |
| S₂ 2-(1-methoxypropyl)- | -- | -- | -- | -- | 0.6 | -- | -- | -- |
| S₃ | 2.7 | 5.2 | 5.4 | 4.8 | 6.1 | 3.0 | 1.4 | 0.9 |
| S₃ non-methylated on 0.6 | -- | -- | -- | -- | 0.5 | -- | -- | -- |
| S₆ | 12.5 | 23.6 | 3.8 | 2.6 | 7.0 | 26.4 | 33.0 | 23.3 |
| S₆ non-methylated on O-3 | -- | -- | -- | -- | 0.5 | 1.5 | -- | -- |
| S₆ 2-(1-methoxypropyl)- | -- | -- | -- | -- | -- | 0.6 | -- | -- |
| Total monosubstituted | 20.4 | 39.7 | 39.5 | 22.0 | 38.3 | 40.1 | 37.5 | 36.5 |
| S₂₃ | 0.6 | 3.9 | 14.3 | 2.2 | 8.9 | 2.8 | 0.7 | -- |
| S₂₆ | 0.9 | 7.5 | 3.7 | 0.9 | 5.2 | 6.4 | 1.9 | 1.8 |
| S₂₆ non-methylated on 0.3 | -- | -- | -- | -- | 0.7 | -- | -- | -- |
| S₃₆ | 0.3 | 2.3 | 1.4 | 0.5 | 1.6 | 2.2 | 0.9 | -- |
| S₆₆ | -- | -- | -- | -- | -- | 0.3 | 4.7 | 6.0 |
| Total disubstituted | 1.8 | 13.7 | 19.4 | 3.6 | 16.4 | 11.7 | 8.2 | 7.8 |
| S₂₂₆ | -- | -- | -- | -- | -- | 0.2 | 0.2 | -- |
| S₂₃₆ | 0.1 | 2.7 | 1.7 | -- | 2.4 | 2.3 | 0.7 | -- |
| S₂₆₆ | -- | -- | -- | -- | -- | 0.5 | 0.4 | -- |
| S₆₆₆ | -- | -- | -- | -- | -- | -- | 0.2 | -- |
| Total trisubstituted | 0.1 | 2.7 | 1.7 | 0 | 2.4 | 3.0 | 1.5 | 0 |

**Table 3**

| Relative Reactivities at the 2,3- and 6-Positions and Average Degree of Substitution Values for the Different 2-Hydroxypropyl Ethers of β-Cyclodextrin | | | | | |
|---|---|---|---|---|---|
| | | | | Average Degree of substitution | |
| Example | propylene | %NaOH^{a} | k₂:k₃:k₆ | From mole % of ethers | From m.s. |
| 1 | (RS) | 16.9 | 1:0.43:2.1 | 1.7 | 2.5 |
| 2 | (RS) | 17.5 | 1:0.40:1.6 | 5.3 | 6.8 |
| 3 | (RS) | 5.7 | 1:0.15:0.12 | 5.8 | 6.6 |
| 4 | (S) | 1.5 | 1:0.36:0.08 | 2.0 | 3.4 |
| 5 | (S) | 4.8 | 1:0.27:0.32 | 5.5 | 6.0 |
| 6 | (S) | 17.0 | 1:0.28:2.2 | 5.2 | 5.8 |
| 7 | (S) | 30 | 1:0.41:7.6 | 4.0 | 5.2 |
| 8 | (S) | ^{b} | 1:0.17:8.3 | 3.0 | - |

| | | | | | |
|---|---|---|---|---|---|
| ^{a} Concentration of aqueous sodium hydroxide solution (W/W) used as a solvent for the other reaction components. | | | | | |
| ^{b} Sodium methylsulfinylmethide in dimethyl sulfoxide. | | | | | |

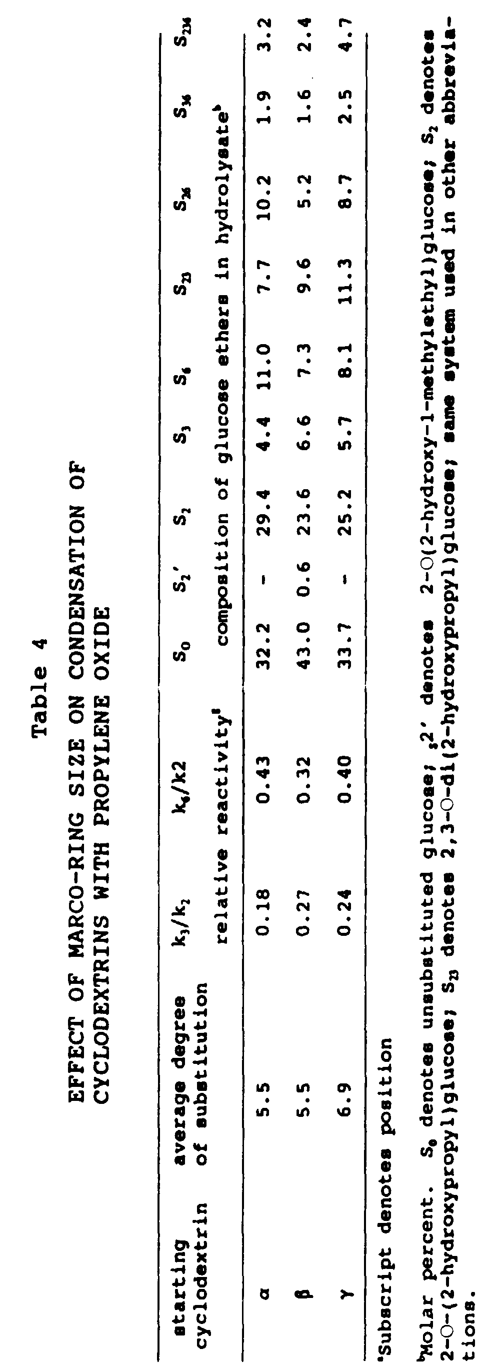

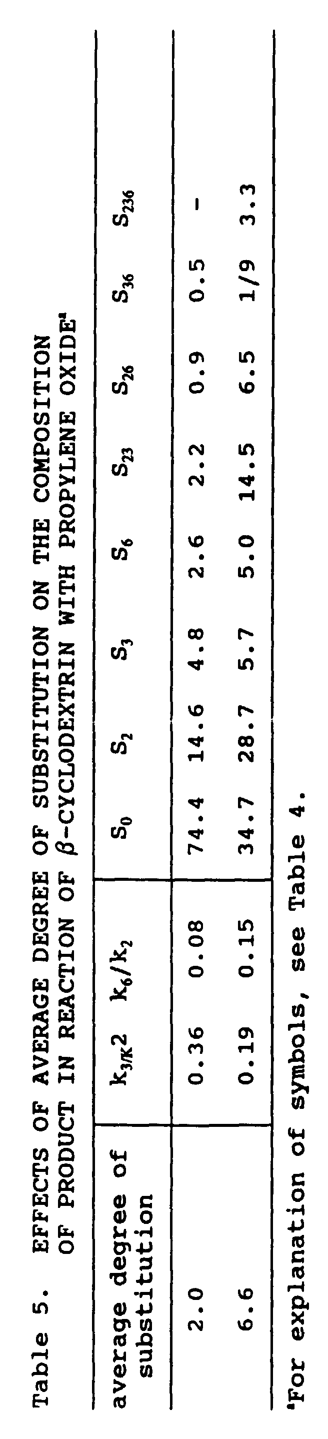

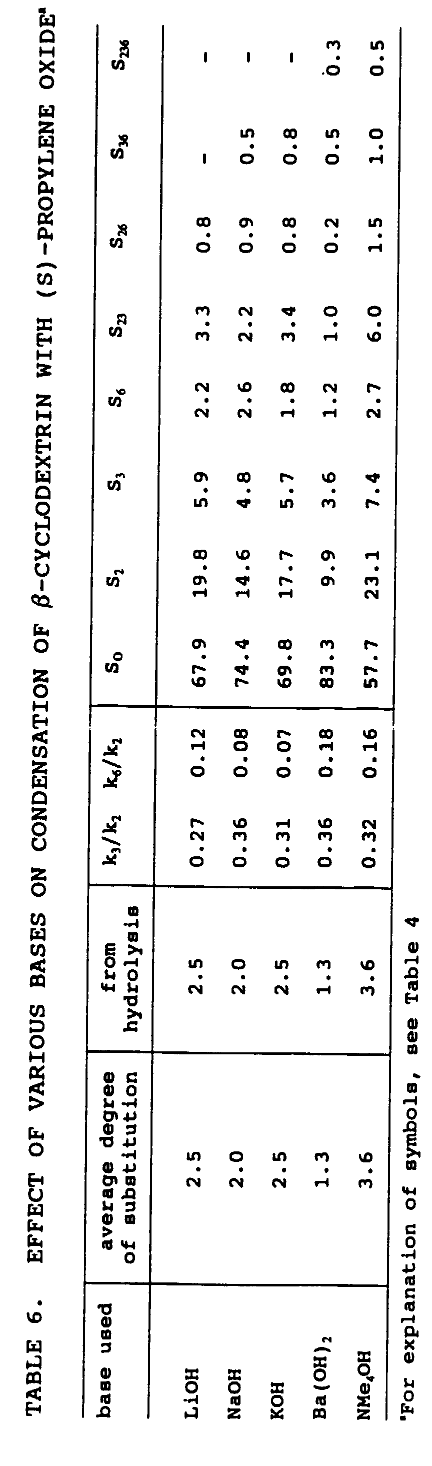

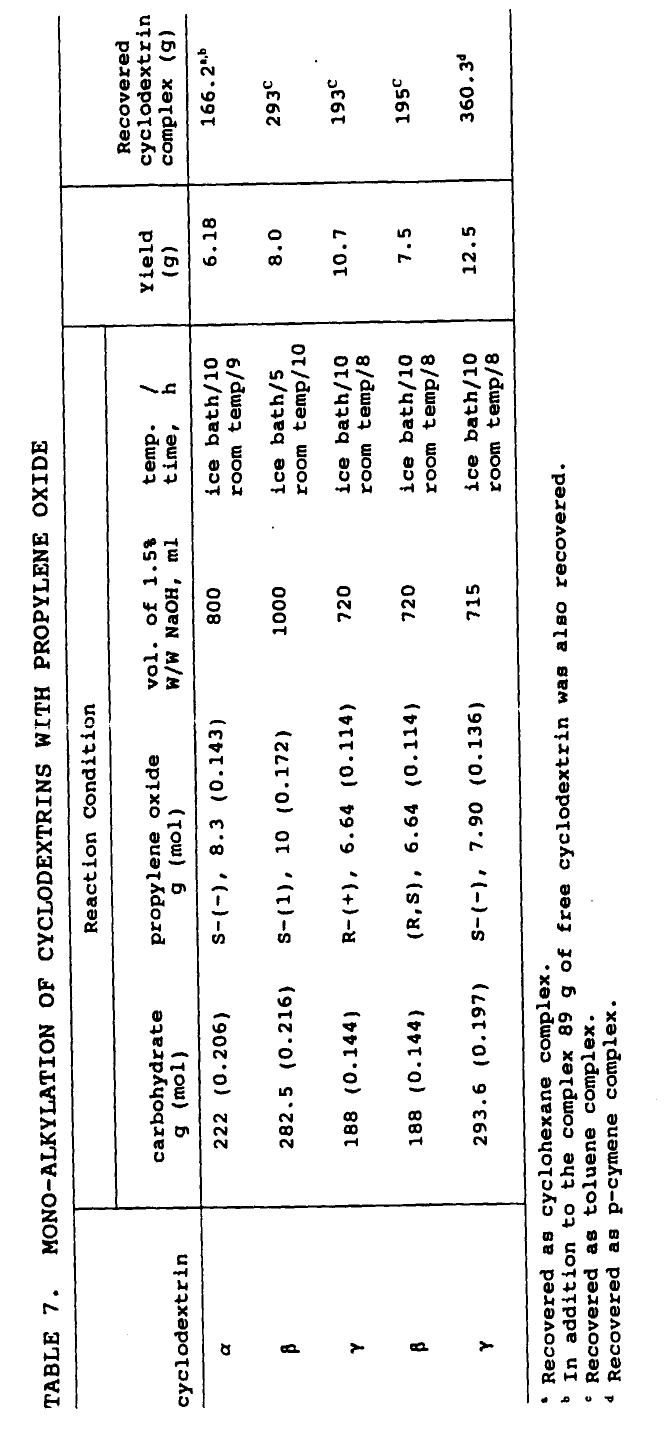

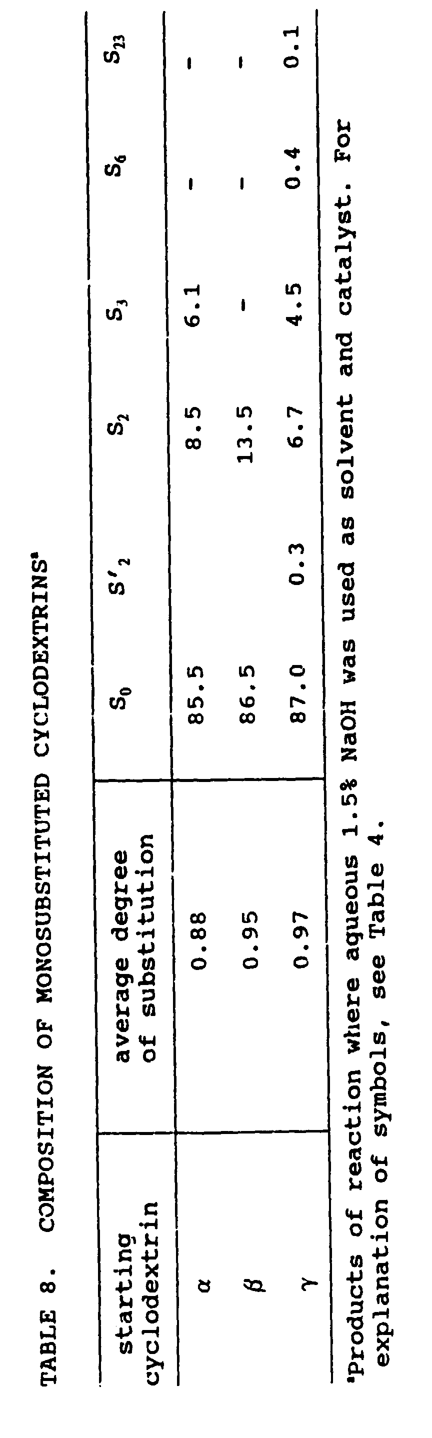

## Claims

1. A process for increasing the solubility of a cyclodextrin in water comprising reacting a cyclodextrin with ammonia under heterogeneous catalytic conditions by exposing the cyclodextrin to Raney nickel.

2. A process according to claim 1, wherein the cyclodextrin is a hydroxypropyl-β-cyclodextrin.

3. A process according to claim 2, wherein the hydroxycyclodextrin is prepared by reacting a cyclodextrin with propylene oxide under basic conditions.

4. A process according to claim 3, wherein the reaction takes place in the presence of aqueous sodium hydroxide.

5. A composition comprising at least one cyclodextrin, ammonia and Raney nickel.

6. A composition according to claim 5, wherein the cyclodextrin is a hydroxypropylcyclodextrin.

## Patentansprüche

1. Verfahren zur Erhöhung der Löslichkeit eines Cyclodextrins in Wasser, wobei das Cyclodextrin mit Ammonium unter heterogenen katalytischen Bedingungen durch Zusammenbringen des Cyclodextrins mit Raney-Nickel reagiert wird.

2. Verfahren nach Anspruch 1, wobei das Cyclodextrin ein Hydroxypropyl-Beta-Cyclodextrin ist.

3. Verfahren nach Anspruch 2, wobei das Hydroxycyclodextrin durch Reagieren eines Cyclodextrins mit Propylenoxid unter basischen Bedingungen hergestellt wird.

4. Verfahren nach Anspruch 3, wobei die Reaktion in Anwesenheit von wässrigem Natriumhydroxid stattfindet.

5. Zusammensetzung, die mindestens ein Cyclodextrin, Ammonium und Raney-Nickel umfaßt.

6. Zusammensetzung nach Anspruch 5, wobei das Cyclodextrin ein Hydroxypropyl-Cyclodextrin ist.

## Revendications

1. Procédé d'augmentation de la solubilité d'une cyclodextrine dans l'eau, comprenant l'étape consistant à faire réagir une cyclodextrine avec du gaz ammoniac dans des conditions de catalyse hétérogène, en exposant la cyclodextrine à du nickel de Raney.

2. Procédé selon la revendication 1, dans lequel la cyclodextrine est une hydroxypropyl-β-cyclodextrine.

3. Procédé selon la revendication 2, dans lequel l'hydroxycyclodextrine est préparée en faisant réagir une cyclodextrine avec de l'oxyde de propylène dans des conditions basiques.

4. Procédé selon la revendication 3, dans lequel la réaction a lieu en présence d'hydroxyde de sodium aqueux.

5. Composition comprenant au moins une cyclodextrine, du gaz ammoniac et du nickel de Raney.

6. Composition selon la revendication 5, dans laquelle la cyclodextrine est une hydroxypropylcyclodextrine.
